## Europäisches Patentamt
## European Patent Office
## Office européen des brevets

(19)

(11) Veröffentlichungsnummer : **0 019 047**
**B1**

(12) **EUROPÄISCHE PATENTSCHRIFT**

(45) Veröffentlichungstag der Patentschrift :
**16.02.83**

(51) Int. Cl.³ : **B 64 C 27/32**

(21) Anmeldenummer : **80101268.3**

(22) Anmeldetag : **12.03.80**

(54) **Schlag-, schwenk- und blattverstellgelenkloser Mehrblattrotor für ein Drehflügelflugzeug.**

(30) Priorität : **16.05.79 DE 2919684**

(43) Veröffentlichungstag der Anmeldung :
**26.11.80 Patentblatt 80/24**

(45) Bekanntmachung des Hinweises auf die Patenterteilung : **16.02.83 Patentblatt 83/07**

(84) Benannte Vertragsstaaten :
**FR GB IT**

(56) Entgegenhaltungen :
**DE A 1 456 014**
**FR A 2 374 212**
**FR A 2 412 461**
**GB A 2 001 290**

(73) Patentinhaber : **Messerschmitt-Bölkow-Blohm Gesellschaft mit beschränkter Haftung**
**Postfach 801109**
**D-8000 München 80 (DE)**

(72) Erfinder : **Derschmidt, Hans, Dipl.-Ing.**
**Zugspitzstrasse 6**
**D-8011 Putzbrunn (DE)**
Erfinder : **Frommlet, Hubert, Dipl.-Ing.**
**Ahornring 65**
**D-8011 Siegertsbrunn (DE)**

Jouve, 18, rue St-Denis, 75001 Paris, France

Schlag-, schwenk- und blattverstellgelenkloser Mehrblattrotor für ein Drehflügelflugzeug

Die Erfindung bezieht sich auf einen schlag-, schwenk- und blattverstellgelenklosen Mehrblattrotor für ein Drehflügelflugzeug, insbesondere einen Hubschrauber-Heckrotor, bei dem die auftriebserzeugenden Flügelabschnitte der Rotorblätter an ihren blattwurzelseitigen Enden jeweils über mehrere, parallel wirkende, torsionselastische und in Schlag- und Schwenkrischtung biegeelastische Holmabschnitte mit der Rotornabe verbunden und die Befestigungsstellen der Holmabschnitte an der Rotornabe in Rotorumlaufrichtung versetzt zueinander angeordnet sind, wobei die Holmabschnitte einander in für alle Rotorblätter gleichsinniger Anordnung übergreifen.

Es ist bei Hubschrauber-Heck- und -Hauptrotoren bekannt (z. B. FR-A-2 374 212 und DE-A-1 456 014), jedes Rotorblatt an die Rotornabe über mehrere, vom Flügelabschnitt des Rotorblatts zur Rotordrehachse hin divergent auseinanderlaufende Holmabschnitte anzuschließen, die in Schlagrichtung biegeweicher als in Schwenkrichtung ausgebildet sind und bei der Blattwinkelverstellung zwischen ihren Enden verdrillt werden. Bei dem Rotor der eingangs erwähnten Art (nach der nicht-vorveröffentlichten und daher nicht zum Stand der Technik im Sinne des EPÜ gehoerenden FR-A-2 412 461) sind zusätzlich die beiden hinteren Holmabschnitte jedes Rotorblatts und der vordere Holmabschnitt des unmittelbar nachfolgenden Rotorblatts über ein und denselben Befestigungsbolzen unter gegenseitiger Verschachtelung und in einer für alle Rotorblätter gleichsinnigen Anordnung an die Rotornabe angeschlossen. Alle diese Rotoren sind insofern nachteilig, als die im Bereich der Holmabschnitte liegenden, fiktiven Schwenk- und vor allem Schlaggelenke zumeist unerwünscht weit von der Rotordrehachse entfernt sind und die frei verdrillbare Länge zumindest einiger Holmabschnitte deutlich kleiner als der Abstand zwischen der Rotordrehachse und dem flügelseitigen Ende des Holmabschnitts ist, so daß vergleichsweise hohe Steuerkräfte für die zyklischen und kollektiven Blattwinkelverstellbewegungen aufgebracht werden müssen.

Demgegenüber liegt der Erfindung die Aufgabe zugrunde, einen Mehrblattrotor der beanspruchten Art so auszubilden, daß die für die Blattwinkelverstellung erforderlichen Steuerkräfte wesentlich reduziert werden und sich die fiktiven Schlag- und Schwenkgelenke merklich näher an die Rotordrehachse verlegen lassen.

Zur Lösung dieser Aufgabe ist der Rotor der eingangs erwähnten Art erfindungsgemäß dadurch gekennzeichnet, daß die nabenseitigen Befestigungsstellen der Holmabschnitte jedes Rotorblattes im Bereich der dem Rotorblatt abgewandten Halbseite der Rotornabe liegen und an dieser derart mit gegenseitigem Abstand in Rotorachsrichtung angeordnet sind, daß der in Rotorumlaufrichtung hintere Holmabschnitt jedes Rotorblattes den vorderen Holmabschnitt des unmittelbar nachfolgenden Rotorblatts mit einem freien Zwischenraum übergreift.

Bei dem erfindungsgemäßen Rotor wird infolge der speziellen Lage der nabenseitigen Befestigungs- oder Einspannstellen die freie Länge der Holmabschnitte im Bereich der Rotornabe, also ohne Verlängerung der Holmabschnitte an ihren flügelseitigen Endbereichen, derart vergrößert, daß sich der Abstand der fiktiven Schlag- und Schwenkgelenke von der Rotordrehachse auf ein erwünschtes Maß verringern läßt und zugleich die für die bei der Blattwinkelverstellung erforderlichen Steuerkräfte maßgebliche Torsionssteifigkeit der Holmabschnitte ohne Beeinträchtigung ihres in Schlag- und Schwenkrichtung biegeelastischen Verhaltens deutlich abnimmt, wobei eine Besonderheit in der sich gegenseitig mit einem freien Zwischenraum überbzw. untergreifenden Anordnung der Holmabschnitte liegt, was voneinander unabhängige Schlag- und Schwenkbiegeschwingungen der einzelnen Rotorblätter ohne gegenseitige Behinderung sowie einen für alle Rotorblätter identischen Blattanschluß gestattet, ohne daß es im Bereich der Rotornabe zu einem hinsichtlich der wirksamen Beanspruchungen und Kippmomente störenden Kraftfluß kommt. Insgesamt zeigt der erfindungsgemäße Rotor bei günstiger Lage der fiktiven Gelenke und kleinen Abmessungen ein wesentlich verbessertes Steuerverhalten und ist insbesondere als Heckrotor für einen Hubschrauber verwendbar.

Um für die nabenseitige Verlängerung der Holmabschnitte möglichst die gesamte Querschnittsfläche der Rotornabe auszunutzen, liegen die Befestigungsstellen der Holmabschnitte in besonders bevorzugter Weise in dem dem jeweils zugeordneten Rotorblatt abgewandten, äußeren Randbereich der Rotornabe. Eine hinsichtlich der auf die Rotornabe einwirkenden Belastungen bei für alle Rotorblätter völlig identischem Blattanschluß besonders vorteilhafte Ausgestaltung der Erfindung besteht darin, daß die Befestigungsstellen einander entsprechender Holmabschnitte der Rotorblätter in einer gemeinsamen, zur Rotorachse senkrechten Ebene liegen. Vor allem bei Rotoren mit mehr als zwei Rotorblättern empfiehlt es sich, die gegenseitige Verschachtelung der Holmabschnitte in der Weise auszubilden, daß der in Rotorumlaufrichtung hintere Holmabschnitt jedes Rotorblatts und der vordere Holmabschnitt des unmittelbar nachfolgenden Rotorblatts mit gegenseitigem Abstand in Rotorachsrichtung sich kreuzend übereinander liegen.

Insbesondere für den Fall, daß jedes Rotorblatt zwei, vom Flügelabschnitt zur Rotornabe V-förmig auseinanderlaufende Holmabschnitte aufweist, ist zweckmäßigerweise der in Rotorumlaufrichtung vordere Holmabschnitt des Rotorblatts über eine in Rotorschubrichtung höher liegende Befestigungsstelle als der in Umlaufrichtung hintere Holmabschnitt dieses Rotorblatts mit der Rotornabe verbunden. Dies hat den Vorteil, daß sich im unverdrillten Zustand der Holmabschnitte eine auftriebserzeugende Voreinstellung der Rotorblätter bei zugleich äußerst einfacher Ausbildung des Anschluß- bzw. Übergangsbereichs zwischen den Holm- und Flügelabschnitten erreichen läßt. Um an den nabenseitigen Befestigungsstellen die Montage zu vereinfachen und die Anzahl der Bauteile zu verringern, enthalten die nabenseitigen Befestigungsstellen vorzugsweise jeweils einen für mehrere Holmabschnitte verschiedener Rotorblätter gemeinsamen, parallel zur Rotorachse an der Nabe gesicherten Befestigungsbolzen. In diesem Fall wird eine besonders sichere Lagerung der Befestigungsbolzen dadurch erreicht, daß diese vorzugsweise jeweils an mehreren, in Rotorachsrichtung mit gegenseitigem Abstand übereinander liegenden Flanschabschnitten der Rotornabe abgestützt und durch axiale Anschläge gegen ein Herausfallen bei einem Bolzenbruch gesichert sind, so daß die Rotorblätter bei einem Biegebruch der Bolzen durch die dann noch verbleibende Bolzenscherfestigkeit an der Rotornabe gehalten werden.

In ihrem nabenseitigen Endbereich weisen die Holmabschnitte vorzugsweise einen zur zugeordneten Befestigungsstelle hin zunehmend in Schlagrichtung biegesteiferen Querschnitt auf und sind schlaufenförmig ausgebildet, um die Entstehung von Spannungsspitzen an den Befestigungsstellen zu vermeiden und eine günstige Anschlußmöglichkeit über Schlaufen geringer radialer Wandstärke zu schaffen.

Mit besonderem Vorteil haben die Holmabschnitte zwischen ihrem nabenseitigen Endbereich und dem Flügelabschnitt des Rotorblatts einen rechteckigen Querschnitt mit einer größeren Querschnittshöhe als -breite und die in Richtung der Querschnittshöhe verlaufenden Mittellinien liegen im nichttordierten Zustand der Holmabschnitte schräg zu einer zur Rotorachse senkrechten Ebene. Auf Grund dieser speziellen Querschnittsgeometrie wird bei äußerst geringer Torsionssteifigkeit eine wesentlich kleinere Schlag- als Schwenksteifigkeit der Holmabschnitte erzielt und im unverdrillten Zustand der Holmabschnitte die Mitte des Blattwinkelverstellbereichs erreicht.

Aus Gründen der für den erfindungsgemäßen Rotor besonders günstigen Materialeigenschaften bestehen die Holmabschnitte vorzugsweise aus Faserverbundwerkstoff mit in Holmlängsrichtung unidirektionalem Faserverlauf, wobei eine äußerst einfache, last- und werkstoffgerechte Verbindung der Holmabschnitte mit dem zugeordneten Flügelabschnitt zweckmäßigerweise dadurch erreicht wird, daß die Holmabschnitte jedes Rotorblatts einstückig mit einem vom Flügelabschnitt bis zur Blattspitze verlaufenden Tragholm ausgebildet sind.

In weiterer vorteilhafter Ausgestaltung der Erfindung sind an den flügelseitigen Enden der Holmabschnitte jedes Rotorblatts ein Steuerhorn zur Blattwinkelverstellbewegung sowie auf einer gemeinsamen Achse liegend Trimm- und Propellermomentenausgleichsgewichte befestigt. Hierdurch wird eine möglichst große Holmlänge zum Verdrillen der Holmabschnitte ausgenutzt und die Gesamtmasse der für den Propellermomentenausgleich und das statische und dynamische Auswuchten der Rotorblätter erforderlichen Zusatzgewichte wesentlich verringert, da die Trimmgewichte auch im Sinne eines Propellermomentenausgleichs wirksam werden.

Die Erfindung wird nunmehr an Hand zweier Ausführungsbeispiele in Verbindung mit den Zeichnungen näher erläutert. Es zeigt :

Figur 1 die Aufsicht eines Dreiblatt-Heckrotors in stark schematisierter Darstellung ;

Figur 2 eine schematische Teilaufsicht des Heckrotors gem. Fig. 1 ;

Figur 3 einen schematischen Schnitt längs der Linie III-III der Fig. 2 ;

Figur 4 eine schematische Ansicht der Holmabschnitte eines Rotorblatts in Blickrichtung der Pfeile IV-IV der Fig. 2 ;

Figur 5 einen schematischen Schnitt längs der Linie V-V der Fig. 2 ;

Figur 6 eine der Fig. 1 entsprechende Darstellung eines Vierblatt-Heckrotors, jedoch mit umgekehrter Rotorschubrichtung ; und

Figur 7 eine vergrößerte Teilaufsicht des Heckrotors gemäß Fig. 6.

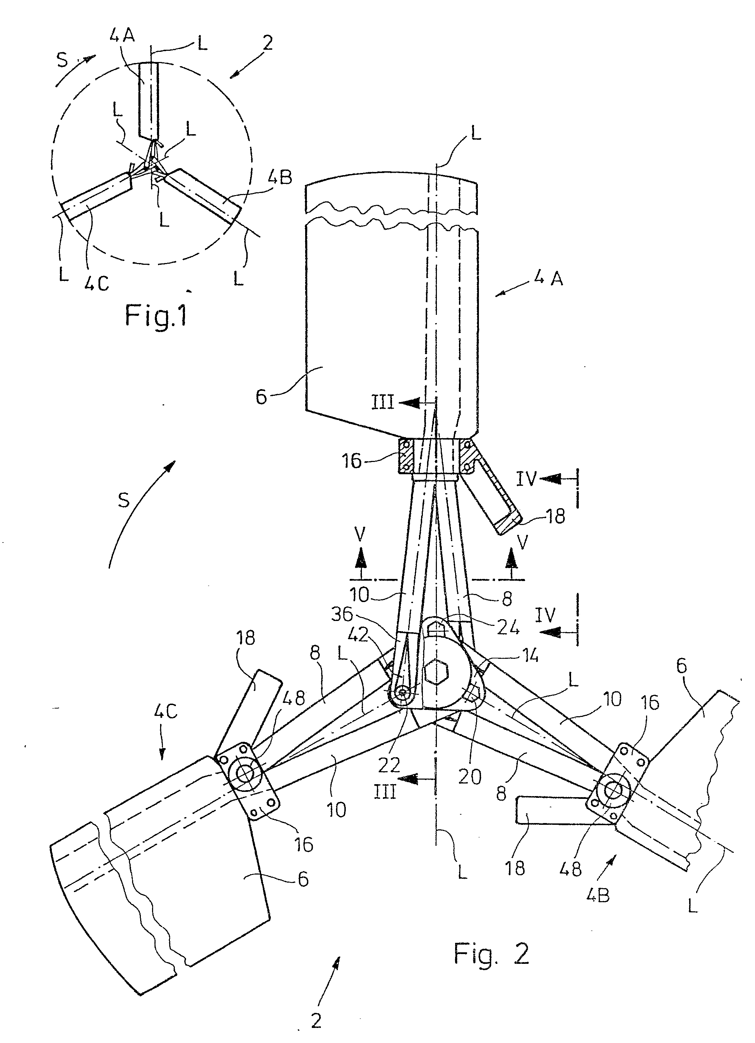

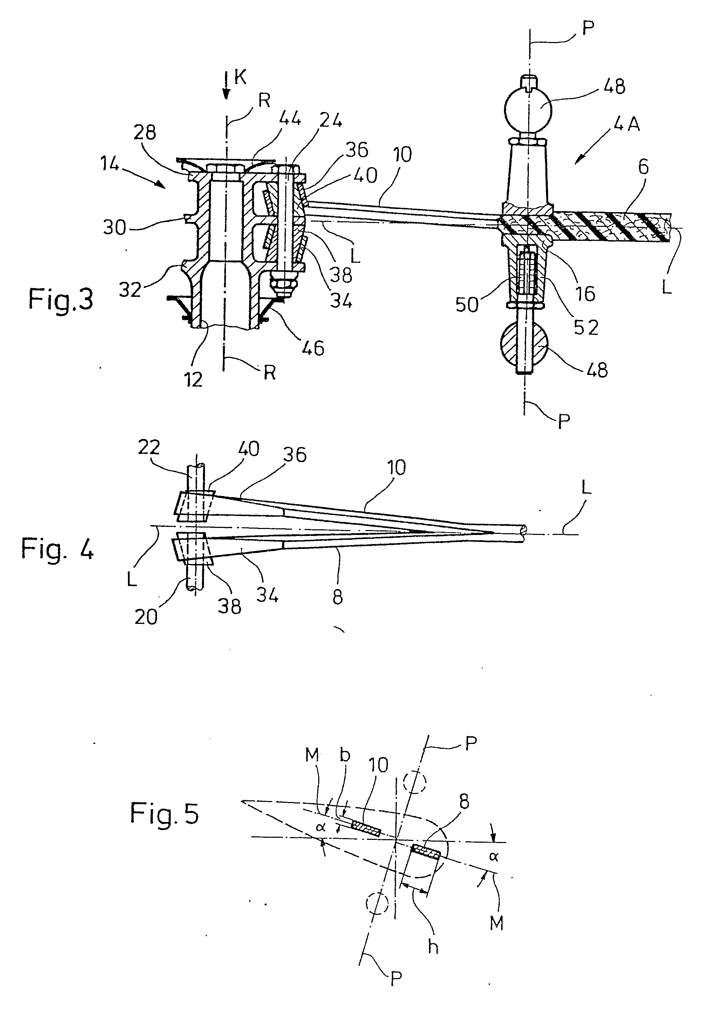

Die Fig. 1 bis 5 zeigen einen Dreiblatt-Hubschrauberheckrotor 2, der beim Umlauf im Drehsinn S eine in Richtung der Rotordrehachse R-R nach unten, also zum Hubschrauberheck hin gerichtete Rotorschubkraft K (Fig. 3) erzeugt und dessen Rotorblätter 4 A, B, C jeweils über zwei, vom Flügelabschnitt 6 der Rotorblätter zur Rotorachse R-R hin V-förmig auseinanderlaufende Holmabschnitte 8, 10 an eine im wesentlichen starre, am oberen Ende des Rotormastes 12 ausgebildete Rotornabe 14 angeschlossen sind.

Die Holmabschnitte 8, 10, die aus Faserverbundwerkstoff, z. B. glasfaserverstärktem Kunststoff, mit in Holmlängsrichtung unidirektionaler Faserrichtung bestehen, sind zum Winkeln der Blätter um die Blattlängsachse L-L torsionselastisch sowie in Schlag- und Schwenkrichtung unter Bildung fiktiver Gelenke biegeelastisch ausgebildet, und zwar aus Gründen eines guten Steuerverhaltens des Rotors 2 biegeweicher in Schlag- als in Schwenkrichtung, und gehen an ihren flügelseitigen Enden, wo sie durch eine zweiteilige Spange 16 zusammengehalten werden, einstückig in einen (in Fig. 2 gestrichelt gezeichneten) bis zur Blattspitze reichenden Tragholm des zugeordneten Flügelabschnitts 6 über. Das Verwinden der Holmabschnitte 8, 10 und Winkeln des zugeordneten Rotorblatts um die jeweilige Blattlängsachse L-L wird durch ein an der Spange 16 befestigtes Steuerhorn 18 bewirkt, das an eine (nicht gezeigte) Steuerstange für die zyklische und

kollektive Blattwinkelverstellbewegung angeschlossen ist.

Am nabenseitigen Ende sind die Holmabschnitte 8, 10 durch Befestigungsbolzen 20, 22, 24 an der Rotornabe 14 in der Weise angeschlossen, daß jeweils zwei Holmabschnitte 8, 10 benachbarter Rotorblätter durch den gleichen Befestigungsbolzen gesichert sind und die jedem Rotorblatt zugeordneten Befestigungsbolzen auf der diesem Rotorblatt abgewandten Halbseite der Rotornabe 14 liegen. So werden am Befestigungsbolzen 20 sowohl der Holmabschnitt 8 des Rotorblatts 4A als auch der Holmabschnitt 10 des Rotorblatts 4C gehalten, und die dem Rotorblatt 4A zugeordneten Befestigungsbolzen 20, 22 sind auf der diesem Rotorblatt 4A abgewandten Halbseite im äußeren Randbereich der Rotornabe 14 angeordnet.

Gesichert sind die Befestigungsbolzen 20, 22, 24 an drei, in Rotorachsrichtung aufeinanderfolgenden Flanschen 28, 30, 32 der Rotornabe 14 (Fig. 3), wobei sämtliche, in Rotorumlaufrichtung S hintere Holmabschnitte 10 zwischen den Flanschen 28 und 30 und sämtliche, in Rotorumlaufrichtung S vordere Holmabschnitte 8 zwischen den Flanschen 30 und 32, also jeweils auf gleicher Höhe bezüglich der Rotordrehachse R-R an die Rotornabe 14 angeschlossen sind. Hierdurch wird ein für alle Rotorblätter identischer Blattanschluß erreicht und eine ungestörte elastische Verformung der Holmabschnitte 8, 10 bei den Schlag-, Schwenk- und Blattwinkelverstellbewegungen der Rotorblätter über die gesamte Holmlänge sichergestellt.

Wie Fig. 5 am deutlichsten zeigt, haben die Holmabschnitte 8, 10 jeweils einen rechteckigen Querschnitt mit einer wesentlich grösseren Querschnittshöhe h als Querschnittsbreite b. Sie haben nicht nur einen zu den Befestigungsbolzen hin zunehmend größeren, gegenseitigen Abstand in Rotorachsrichtung, wobei der in Rotorumlaufrichtung vordere Holmabschnitt 8 in Rotorschubrichtung K über dem hinteren Holmabschnitt 10 liegt, sondern ihre in Richtung der Querschnittshöhe h verlaufenden Mittellinien M sind auch um den Winkel $\overset{ca}{\alpha}$/(10°) schräg zu einer zur Rotordrehachse R-R senkrechten Ebene geneigt. Infolge dessen sind die Holm-schnitte 8, 10 in Schlagrichtung wesentlich biegeweicher als in Schwenkrichtung ausgebildet und ihre Mittellinien M haben im unverdrillten Zustand der Holmabschnitte die gleiche Neigung wie das (in Fig. 5 in gestrichelten Linien gezeichnete) Tragflügelprofil in der Mitte des Blattwinkelverstellbereichs, so daß der beim zyklischen und kollektiven Winkeln der Blätter maxi-mal erforderliche Verdrillwinkel der Holm-schnitte 8, 10 gegenüber dem unverdrillten Zustand kleingehalten wird und sich die Quer-schnittsmittellinien M der Holmabschnitte 8, 10 im Übergangsbereich zum Flügelabschnitt 6 parallel zur Blattflügelsehne erstrecken.

An ihren nabenseitigen Enden sind die Holmabschnitte 8, 10 als Schlaufen 34, 36 ausgebildet, die den zugeordneten Befestigungsbolzen unter Zwischenlage einer Buchse 38 bzw. 40 umschlingen. Die Buchsen 38, 40 sind an ihrer zylindrischen Außenfläche der Neigung der Schlaufen 34, 36 angepaßt, während die zentrale, den Befestigungsbolzen aufnehmende Buchsenbohrung parallel zur Rotorachse R-R ausge-richtet ist. Zwischen die Schlaufenbereiche jedes Holmabschnitts 8, 10 ist ein Füllstück 42 (Fig. 2) eingesetzt, das ebenfalls aus Faserverbundwerkstoff besteht. Im Schlaufenbereich wird die Querschnittsbreite b der Holmabschnitte 8, 10 zur nabenseitigen Befestigungsstelle hin zunehmend größer, während die radiale Wandstärke in Richtung der Querschnittsmittellinie M abnimmt. Hierdurch werden Spannungsspitzen an den na-benseitigen Befestigungsstellen der Holmab-schnitte 8, 10 abgebaut. Damit die Befestigungsbolzen 20, 22, 24 bei einem Biegebruch nicht herausfallen und die Holmabschnitte 8, 10 durch die dann auf Scherung beanspruchten Bolzen mit der Nabe verbunden bleiben, sind die Bolzen an ihren oberen und unteren Enden durch axiale Anschlagscheiben 44, 46 gesichert.

Der Propellermomentenausgleich erfolgt in üblicher Weise durch Ausgleichsgewichte 48, die an der Spange 16 in Richtung der Momentenausgleichsachse P-P einstellbar befestigt sind. Gleichzeitig werden auch die zum Auswuchten der Blätter erforderlichen Trimmgewichte 50 in beidseitig der Blattebene liegenden Kammern 52 konzentrisch zur Momentenausgleichsachse P-P untergebracht (Fig. 3), so daß sie unter ent-sprechender Gewichtseinsparung der Aus-gleichsgewichte 48 mit zum Propellermomenten-ausgleich beitragen.

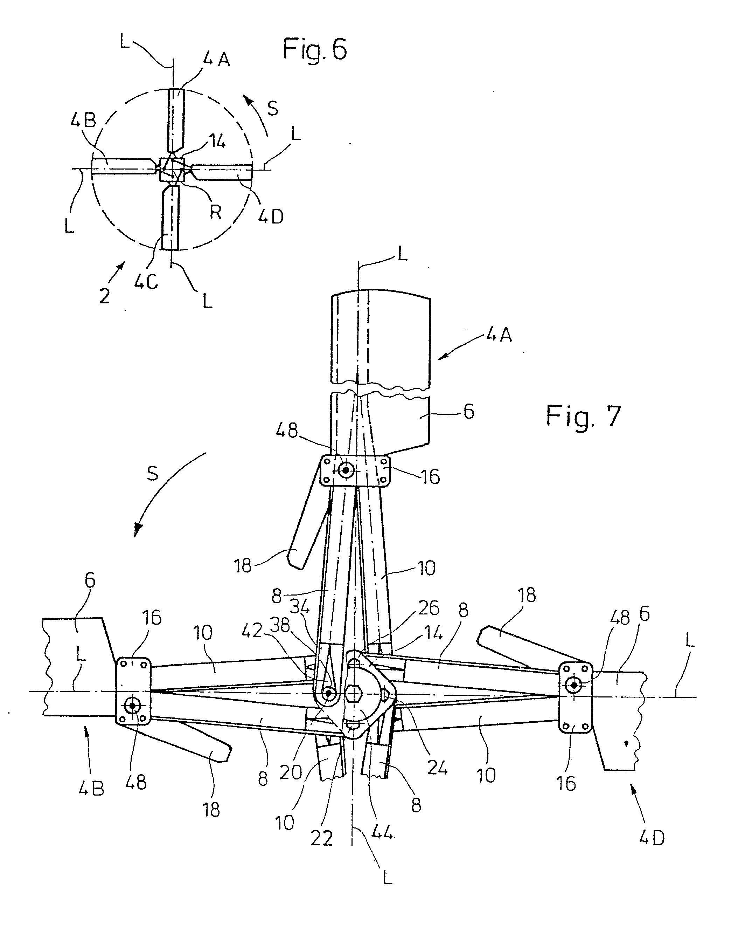

Bei dem Ausführungsbeispiel gemäß den Fig. 6 und 7, bei dem die dem Dreiblattrotor nach den Fig. 1 bis 5 entsprechenden Bauteile durch das gleiche Bezugszeichen gekennzeichnet sind, handelt es sich um einen Heckrotor mit vier Rotorblättern 4A, B, C und D und umgekehrt, also in Richtung der Rotordrehachse R-R nach oben gerichteter Rotorschubkraft K. Dementsprechend sind die in Drehrichtung S vorderen Holmabschnitte 8 höherliegend, also zwischen den Flanschen 28 und 30, und die in Drehrichtung S hinteren Holmabschnitte 10 tieferliegend, also zwischen den Flanschen 30 und 32, an der Rotornabe 14 angeschlossen, d.h. der Blattanschluß ist bezüglich einer zur Rotordrehachse R-R senkrechten Ebene umgekehrt symmetrisch zu dem des ersten Ausführungsbeispiels. An den im äußeren Randbereich der Rotornabe 14 gleichförmig in Umfangsrichtung verteilt angeordneten Befestigungsbolzen 20, 22, 24 und 26 sind wiederum jeweils unter Zwischenlage einer Paßbuchse 38 (bzw. 40) jeweils zwei Holmabschnitte 8, 10 unterschiedlicher Rotorblätter gehalten, wobei die je-dem Rotorblatt zugeordneten Befestigungs-bolzen gleichfalls im Bereich der diesem Rotroblatt abgewandten Halbseite der Rotornabe 14, hier jedoch an der Grenze zu der dem Rotorblatt zugewandten Rotornabenhälfte liegen. So sind gemäß Fig. 7 den Holmabschnitten 8, 10 der Rotorblätter 4A und 4C die beiden diametral zur Rotordrehachse R-R und im wesentlichen senkrecht zur Längsachse L-L der Rotorblätter 4A, C liegenden Befestigungsbolzen 20 und 24 zugeordnet, während die anderen beiden Befestigungsbolzen 22 und 26 zum Anschluß des Blattpaares 4B, D dienen. Im übrigen entspricht die gegenseitige Verschachtelung und Querschnittsausbildung der Holmabschnitte 8, 10 und die sonstige bauliche und funktionsmäßige Ausbildung dieses Ausführungsbeispiels der des Heckrotors nach den Fig. 1 bis 5.

**Ansprüche**

1. Schlag-, schwenk- und blattverstellgelenkloser Mehrblattrotor für ein Drehflügelflugzeug, insbesondere Hubschrauber-Heckrotor (2), bei dem die auftriebserzeugenden Flügelabschnitte (6) der Rotorblätter (4 A, B, C, D) an ihren blattwurzelseitigen Enden jeweils über mehrere, parallel wirkende, torsionselastische und in Schlag- und Schwenkrichtung biegeelastische Holmabschnitte (8, 10) mit der Rotornabe (14) verbunden und die Befestigungsstellen (20, 22, 24, 26, 38, 40) der Holmabschnitte an der Rotornabe in Rotorumlaufrichtung (S) versetzt zueinander angeordnet sind, wobei die Holmabschnitte einander in für alle Rotorblätter gleichsinniger Anordnung übergreifen, dadurch gekennzeichnet, daß die nabenseitigen Befestigungsstellen (20, 22, 24, 26, 38, 40) der Holmabschnitte (8, 10) jedes Rotorblattes (4 A, B, C, D) im Bereich der dem Rotorblatt abgewandten Halbseite der Rotornabe (14) liegen und an dieser derart mit gegenseitigem Abstand in Rotorachsrichtung (R-R) angeordnet sind, daß der in Rotorumlaufrichtung (S) hintere Holmabschnitt (10) jedes Rotorblattes den vorderen Holmabschnitt (8) des unmittelbar nachfolgenden Rotorblattes mit einem freien Zwischenraum übergreift.

2. Mehrblattrotor nach Anspruch 1, dadurch gekennzeichnet, daß die Befestigungsstellen (20, 22, 24, 26, 38, 40) der Holmabschnitte (8, 10) in den dem jeweils zugeordneten Rotorblatt abgewandten, äußeren Randbereich der Rotornabe (14) liegen.

3. Mehrblattrotor nach Anspruch 1, oder 2, dadurch gekennzeichnet, daß die Befestigungsstellen (22, 24, 26, 28, 38, 40) einander entsprechender Holmabschnitte (8 bzw. 10) der Rotorblätter (4 A, B, C, D) in einer gemeinsamen, zur Rotorachse (R-R) senkrechten Ebene liegen.

4. Mehrblattrotor nach einem der vorhergehenden Ansprüche, dadurch gekennzeichnet, daß der in Rotorumlaufrichtung (S) hintere Holmabschnitt (10) jedes Rotorblatts (4 A, B, C, D) und der vordere Holmabschnitt (8) des unmittelbar nachfolgenden Rotorblatts mit gegenseitigem Abstand in Rotorachsrichtung (R-R) sich kreuzend übereinanderliegen.

5. Mehrblattrotor nach einem der vorhergehenden Ansprüche, bei dem jedes Rotorblatt zwei, vom Flügelabschnitt zur Rotornabe V-förmig auseinanderlaufende Holmabschnitte aufweist, dadurch gekennzeichnet, daß der in Rotorumlaufrichtung (S) vordere Holmabschnitt (8) jedes Rotorblatts (4 A, B, C, D) über eine in Rotorschubrichtung (K) höher liegende Befestigungsstelle (38) als der in Umlaufrichtung hintere Holmabschnitt (10) dieses Rotorblatts mit der Rotornabe (14) verbunden ist.

6. Mehrblattrotor nach einem der vorhergehenden Ansprüche, dadurch gekennzeichnet, daß die nabenseitigen Befestigungsstellen (20, 22, 24, 26, 38, 40) jeweils einen für mehrere Holmabschnitte (8, 10) verschiedener Rotorblätter (4 A, B, C, D) gemeinsamen, parallel zur Rotorachse (R-R) an der Nabe (14) gesicherten Befestigungsbolzen (20, 22, 24, 26) enthalten.

7. Mehrblattrotor nach Anspruch 6, dadurch gekennzeichnet, daß die Befestigungsbolzen (20, 22, 24, 26) jeweils an mehreren, in Rotorachsrichtung (R-R) mit gegenseitigem Abstand übereinanderliegenden Flanschabschnitten (28, 30, 32) der Rotornabe (14) abgestützt und durch axiale Anschläge (44, 46) gegen ein Herausfallen bei einem Bolzenbruch gesichert sind.

8. Mehrblattrotor nach einem der vorhergehenden Ansprüche, dadurch gekennzeichnet, daß die Holmabschnitte (8, 10) in ihrem nabenseitigen Endbereich einen zur zugeordneten Befestigungsstelle (20, 22, 24, 26, 38, 40) hin zunehmend in Schlagrichtung biegesteiferen Querschnitt aufweisen und schlaufenförmig ausgebildet sind.

9. Mehrblattrotor nach einem der vorhergehenden Ansprüche, dadurch gekennzeichnet, daß die Holmabschnitte (8, 10) zwischen ihrem nabenseitigen Endbereich und dem Flügelabschnitt (6) des Rotorblatts (4 A, B, C, D) einen rechteckigen Querschnitt mit einer größeren Querschnittshöhe (h) als -breite (b) aufweisen und die in Richtung der Querschnittshöhe verlaufenden Mittellinien (M) im nichttordierten Zustand der Holmabschnitte schräg zu einer zur Rotorachse senkrechten Ebene liegen.

10. Mehrblattrotor nach einem der vorhergehenden Ansprüche, dadurch gekennzeichnet, daß die Holmabschnitte (8, 10) aus Faserverbundwerkstoff mit im Holmlängsrichtung unidirektionalen Faserlauf bestehen.

11. Mehrblattrotor nach einem der vorhergehenden Ansprüche, dadurch gekennzeichnet, daß die Holmabschnitte (8, 10) jedes Rotorblatts (4 A, B, C, D) einstückig mit einem vom Flügelabschnitt (6) bis zur Blattspitze verlaufenden Tragholm ausgebildet sind.

12. Mehrblattrotor nach einem der vorhergehenden Ansprüche, dadurch gekennzeichnet, daß an den flügelseitigen Enden der Holmabschnitte (8, 10) jedes Rotorblatts (4 A, B, C, D) ein Steuerhorn (18) zur Blattwinkelverstellbewegung sowie auf einer gemeinsamen Achse (P-P) liegend Trimm- (50) und Propellermomentenausgleichsgewichte (48) befestigt sind.

**Claims**

1. A multi-blade rotor, having no beat, swivel and blade adjustment hinge, for a rotary-wing aircraft, more particularly a helicopter tail rotor (2), in which the lift-generating wing portions (6) of the rotor blades (4 A, B, C, D) are connected at their blade-root-side ends to the rotor hub (14) in each case by way of several parallel-acting spar portions (8, 10) which are elastic in torsion and which are elastic to flexure in the beat and swivel direction, and the fastening points (20, 22, 24, 26, 38, 40) of the spar portions on the rotor hub are staggered with regard to one another in the direction of rotation (S) of the rotor, in which respect the spar portions overlap one another in an arrangement which is synonymous for all the rotor blades, characterised in that the hub-side fastening points (20, 22, 24, 26, 38, 40) of the spar portions (8, 10) of each rotor blade (4 A, B, C, D) lie in the region of the half-side, remote from the rotor blade, of the rotor hub (14) and are arranged on this in such a way with mutual spacing in the axial direction (R-R) of the rotor that the rear spar portion (10), in the direction of rotation (S) of the rotor, of each rotor blade overlaps, with a free interspace, the front spar portion (8) of the immediately following rotor blade.

2. A multi-blade rotor as claimed in claim 1, characterised in that the fastening points (20, 22, 24, 26, 38, 40) of the spar portions (8, 10) lie in the outer edge region, remote from the respectively associated rotor blade, of the rotor hub (14).

3. A multi-blade rotor as claimed in claim 1, or 2, characterised in that the fastening points (22, 24, 26, 28, 38, 40) of mutually-corresponding spar portions (8 or 10 respectively) of the rotor blades (4 A, B, C, D) lie in a common plane perpendicular to the rotor axis (R-R).

4. A multi-blade rotor as claimed in one of the preceding claims, characterised in that the rear spar portion (10), in the direction of rotation (S) of the rotor, of each rotor blade (4 A, B, C, D) and the front spar portion (8) of the immediately following rotor blade are intersectingly superjacent with mutual spacing in the rotor axis direction (R-R).

5. A multi-blade rotor as claimed in one of the preceding claims, in which each rotor blade has two spar portions diverging in V-shaped manner from the wing portion to the rotor hub, characterised in that the front spar portion (8), in the direction of rotation (S) of the rotor, of each rotor blade (4 A, B, C, D) is connected to the rotor hub (14) by way of a fastening point (38) lying higher in the rotor thrust direction (K) than the rear spar portion (10), in the direction of rotation, of this rotor blade.

6. A multi-blade rotor as claimed in one of the preceding claims, characterised in that the hub-side fastening points (20, 22, 24, 26, 38, 40) contain in each case a fastening bolt (20, 22, 24, 26) which is common to several spar portions (8, 10) of different rotor blades (4 A, B, C, D) and which is secured, parallel to the rotor axis (R-R), on the hub (14).

7. A multi-blade rotor as claimed in claim 6, characterised in that the fastening bolts (20, 22, 24, 26) are in each case supported on several flange portions (28, 30, 32) which are superjacent with mutual spacing in the rotor axis direction (R-R), of the rotor hub (14) and are protected against falling-out, in the event of a bolt breakage, by axial stops (44, 46).

8. A multi-blade rotor as claimed in one of the preceding claims, characterised in that the spar portions (8, 10) have, in their hub-side end region, a cross-section which is increasingly more resistant to bending in the beat direction towards the associated fastening point (20, 22, 24, 26, 38, 40), and are loop-shaped in design.

9. A multi-blade rotor as claimed in one of the preceding claims, characterised in that the spar portions (8, 10) have, between their hub-side end region and the wing portion (6) of the rotor blade (4 A, B, C, D), a rectangular cross-section having a greater cross-sectional height (h) than width (b), and their centre lines (M), extending in the direction of the cross-sectional height, in the non-torsioned state of the spar portions lie obliquely to a plane perpendicular to the rotor axis.

10. A multi-blade rotor as claimed in one of the preceding claims, characterised in that the spar portions (8, 10) consist of fibre composite material with a fibre course which is unidirectional in the longitudinal direction of the spar.

11. A multi-blade rotor as claimed in one of the preceding claims, characterised in that the spar portions (8, 10) of each rotor blade (4 A, B, C, D) are designed in one piece with a supporting spar extending from the wing portion (6) as far as the blade tip.

12. A multi-blade rotor as claimed in one of the preceding claims, characterised in that a control horn (18) for the blade angular adjustment movement as well as, lying on a common axis (P-P), trim (50) and propeller moment compensating weights (48) are fastened to the wing-side ends of the spar portions (8, 10) of each rotor blade (4 A, B, C, D).

**Revendications**

1. Rotor multipale sans articulations de battement, de traînée et de variation de pas des pales, pour un aéronef à voilure tournante, notamment rotor de queue (2) d'un hélicoptère, dans le cas duquel les sections d'aile (6) des pales de rotor (4 A, B, C, D) engendrant la portance sont chacune reliées, à leur extrémité côté pied de pale, au moyeu (14) du rotor, et ce par l'intermédiaire de plusieurs tronçons de longeron (8, 10) à action parallèle, lesquels sont élastiques en torsion et, dans le sens de battement et de traînée, élastiques en flexion, et les points de fixation (20, 22, 24, 26, 38, 40) des tronçons de longeron sur le moyeu du rotor sont décalés les uns par rapport aux autres dans le sens de rotation (S) du rotor, les tronçons de longeron se chevauchant les uns les autres dans une disposition de même sens pour toutes les pales de rotor, caractérisé en ce que les points de fixation (20, 22, 24, 26, 38, 40), côté moyeu, des tronçons de longeron (8, 10) de chaque pale de rotor (4 A, B, C, D) sont situés dans la zone de la moitié du moyen (14) du rotor qui est située à l'opposé de la pale de rotor, et sont placés sur le moyeu du rotor avec un espacement mutuel dans le sens de l'axe (R-R) du rotor, de telle manière que le tronçon de longeron arrière (10) de chaque pale de rotor, vu dans le sens de rotation (S) du rotor, chevauche, avec un intervalle libre, le tronçon de longeron avant (8) de la pale de rotor immédiatement suivante.

2. Rotor multipale selon la revendication 1, caractérisé en ce que les points de fixation (20, 22, 24, 26, 38, 40) des tronçons de longeron (8, 10) se trouvent dans la zone marginale extérieure du moyeu (14) du rotor qui est située à l'opposé de la pale de rotor associée.

3. Rotor multipale selon la revendication 1 ou 2, caractérisé en ce que les points de fixation (22, 24, 26, 28, 38, 40) de tronçons de longeron correspondants (8 ou 10) des pales de rotor (4 A, B, C, D) sont situés dans un plan commun, perpendiculaire à l'axe (R-R) du rotor.

4. Rotor multipale selon l'une quelconque des revendications précédentes, caractérisé en ce que le tronçon de longeron arrière (10) de chaque pale de rotor (4 A, B, C, D), vu dans le sens de rotation (S) du rotor, et le tronçon de longeron avant (8) de la pale de rotor immédiatement suivante se croisent en étant superposés à distance dans le sens de l'axe (R-R) du rotor.

5. Rotor multipale selon l'une quelconque des revendications précédentes, sur lequel chaque pale de rotor présente deux tronçons de longeron qui divergent en forme de V, à partir de la section d'aile et en direction du moyeu du rotor, caractérisé en ce que le tronçon de longeron avant (8) de chaque pale de rotor (4 A, B, C, D), vu dans le sens de rotation (S) du rotor, est relié au moyeu (14) du rotor par l'intermédiaire d'un point de fixation (38) situé, dans le sens de poussée (K) du rotor, à un niveau plus élevé que le tronçon de longeron arrière (10) de cette pale de rotor, vu dans le sens de la rotation.

6. Rotor multipale selon l'une quelconque des revendications précédentes, caractérisé en ce que les points de fixation (20, 22, 24, 26, 38, 40) côté moyeu comprennent chacun un boulon d'assemblage (20, 22, 24, 26) qui est assujetti au moyeu (14) parallèlement à l'axe (R-R) du rotor et qui est commun à plusieurs tronçons de longeron (8, 10) de différentes pales de rotor (4 A, B, C, D).

7. Rotor multipale selon la revendication 6, caractérisé en ce que les boulons d'assemblage (20, 22, 24, 26) s'appuient chacun sur plusieurs sections de bride (28, 30, 32) du moyeu (14) du rotor, lesquelles sont situées à distance les unes au-dessus des autres, dans le sens de l'axe (R-R) du rotor, et que lesdits boulons sont assujettis par des arrêts axiaux (44, 46) et ne peuvent donc tomber vers l'extérieur en cas de rupture de boulon.

8. Rotor multipale selon l'une quelconque des revendications précédentes, caractérisé en ce que les tronçons de longeron (8, 10) présentent, dans leur zone terminale, côté moyeu, une section transversale dont la résistance à la flexion augmente dans le sens de battement en direction du point de fixation (20, 22, 24, 26, 38, 40) associé, et sont réalisés en forme de boucle.

9. Rotor multipale selon l'une quelconque des revendications précédentes, caractérisé en ce que les tronçons de longeron (8, 10) présentent, entre leur zone terminale, côté moyeu, et la section d'aile (6) de la pale de rotor (4 A, B, C, D), une section transversale rectangulaire dont la hauteur (h) est supérieure à la largeur (b), et que les lignes médianes (M), qui s'étendent dans le sens de la hauteur de la section transversale, sont obliques par rapport à un plan perpendiculaire à l'axe du rotor, lorsque les tronçons de longeron ne sont pas soumis à torsion.

10. Rotor multipale selon l'une quelconque des revendications précédentes, caractérisé en ce que les tronçons de longeron (8, 10) sont réalisés avec un matériau composite renforcé par des fibres, les fibres présentant un tracé unidirectionnel dans le sens de la longueur du longeron.

11. Rotor multipale selon l'une quelconque des revendications précédentes, caractérisé en ce que les tronçons de longeron (8, 10) de chaque pale de rotor (4 A, B, C, D) sont réalisés d'une seule pièce avec un longeron de support qui s'étend de la section d'aile (6) jusqu'à la pointe de la pale.

12. Rotor multipale selon l'une quelconque des revendications précédentes, caractérisé en ce que les extrémités côté aile des tronçons de longeron (8, 10) de chaque pale de rotor (4 A, B, C, D) portent, fixé sur elles, un levier (18) de commande de variation de pas des pales, ainsi que des masses d'équilibrage (50) et des masses de compensation du couple de rotor (48), lesquelles sont situées sur un axe commun (P-P).

Fig.1

Fig. 2

Fig.3

Fig. 4

Fig. 5

Fig. 6

Fig. 7